# EUROPEAN PATENT SPECIFICATION

(11) **EP 1 511 371 B1**
(45) Date of publication and mention of the grant of the patent: **22.08.2007**
(21) Application number: 03730965.5
(22) Date of filing: 27.05.2003
(51) Int. Cl.: A01B 49/00, A01B 29/06, A01B 59/04, A01B 63/00, A01B 73/00

(54) **AN AGRICULTURAL MACHINE**
LANDMASCHINE
MACHINE AGRICOLE

(30) Priority: 11.06.2002 SE 0201794
(43) Date of publication of application: 09.03.2005
(73) Proprietor: Väderstad-Verken AB, 590 21 Väderstad (SE)
(72) Inventor: STARK, Crister, S-590 21 VÄDERSTAD (SE); KARLSSON, Bo, S-585 97 LINKÖPING (SE); MATTSSON, Johan, S-591 60 Motala (SE)
(74) Representative: Stein, Jan Anders Lennart
(86) International application number: PCT/SE2003/000860
(87) International publication number: WO 2003/103369

(56) References cited:
- EP-A2- 0 835 601
- DE-A1- 19 833 674
- SE-A- 8 901 285
- US-A- 3 378 279
- US-A- 5 343 958

## Description

### BACKGROUND OF THE INVENTION

The present invention relates to an agricultural machine comprising a towing device with a coupling member for coupling to a draught vehicle, and at least one elongated section adapted to be conveyed essentially across the direction of work of the agricultural machine, said section comprising at least one soil working member, said section being rotatable from a transport position in which wheels are in contact with the ground, wherein the soil working member is in a higher position, to a working position in which wheels are not in contact with the ground, wherein the soil working member is in a lower position and vice versa.

Such an agricultural machine is known through WO 88/04134, which more precisely describes an agricultural roller.

### SUMMARY OF THE INVENTION

The object of the present invention is to provide the possibility to also use the agricultural machine for other purposes, such as spreading of granular material, e.g. seed and artificial fertilizer.

This has been achieved by an agricultural machine of the initially described type, wherein a device is connected by means of a connecting arrangement to said section, and wherein the connecting arrangement is adapted to maintain the device in essentially the same position relative to the ground in working position and in transport position.

The connecting arrangement is preferably adapted to maintain the device in such a way that it in working position and transport position has essentially the same position relative to the coupling member in a horizontal plane.

Alternatively or additionally, the connecting arrangement is adapted to maintain the device in such a way that it in working position and transport position has essentially the same position relative to the coupling member in a vertical plane.

The connecting arrangement is preferably adapted to displace the device to a further position, which differs from the position in the working position. More precisely, the further position is lower than the working position, viewed in a vertical plane.

The connecting arrangement preferably comprises a joint mechanism.

The joint mechanism advantageously comprises an adjustment member for adjusting the position of the device relative to the ground. More precisely, the adjustment member comprises a hydraulic cylinder or a rigging screw.

The joint mechanism advantageously comprises a dampening member. Hereby, impacts and vibrations can be taken up.

The device is preferably a container for granular material, such as seed or fertilizer. In this case, the container can be open, i.e. without a lid, without any risk of seed spillage. In addition, refilling is made easier. The device can alternatively be a container for liquid. Alternatively, the device can be a further towing device. In this case, it is ensured that the further towing device has a predetermined height over the ground, both in transport position and working position.

Said section is suitably rotatable substantially 90°. Hereby is achieved that the soil-working members are lifted from the transport position to the working position, and vice versa.

Further sections are preferably arranged in the working position on each side of and essentially parallel to the extension of the said section, wherein the further sections in the transport position are arranged essentially perpendicular to the said section. Hereby is achieved an agricultural machine that is allowed to be transported on a road.

Preferably, said further sections are rotatable substantially 90°, together with said section.

Suitably, said section and said further section, respectively, comprises a beam, at which said soil working member is arranged.

### DRAWING SUMMARY

In the following, the invention is described in more detail with reference to the attached drawings in which:
Figure 1 is a top view of the agricultural machine in working position;
Figure 2 illustrates a first stage in the change from working position to transport position;
Figure 3 illustrates a second stage in the change from working position to transport position;
Figure 4 is a top view of the agricultural machine in transport position:
Figure 5 illustrates in perspective the agricultural machine in working position;
Figure 6 illustrates in perspective the agricultural machine in transport position;
Figures 7a - 7b illustrate the agricultural machine in transport position in a different perspective; and
Figures 8a - 8b illustrate an alternative agricultural machine

### DETAILED DESCRIPTION

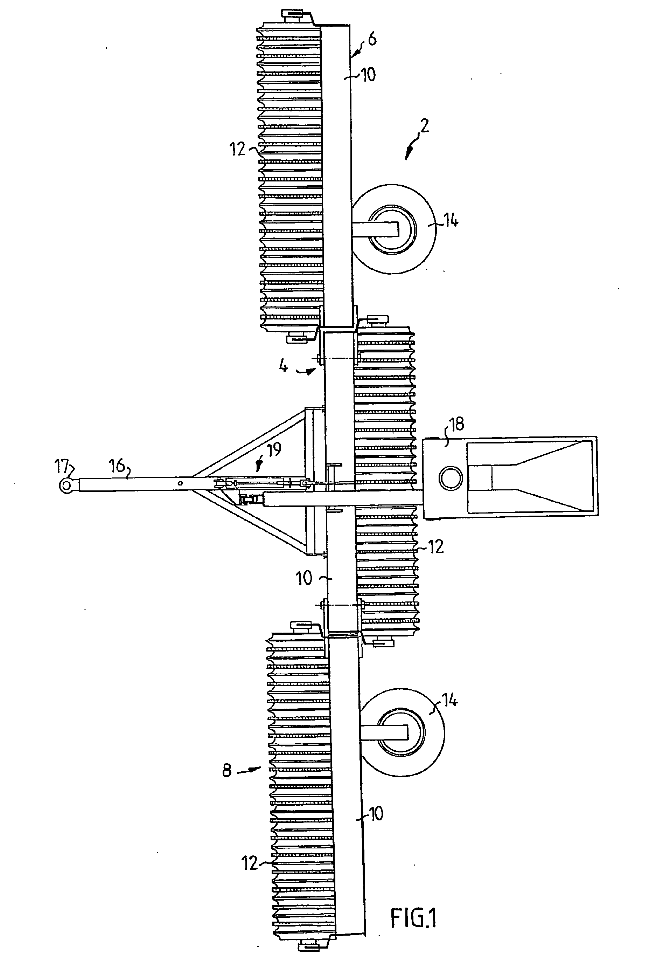

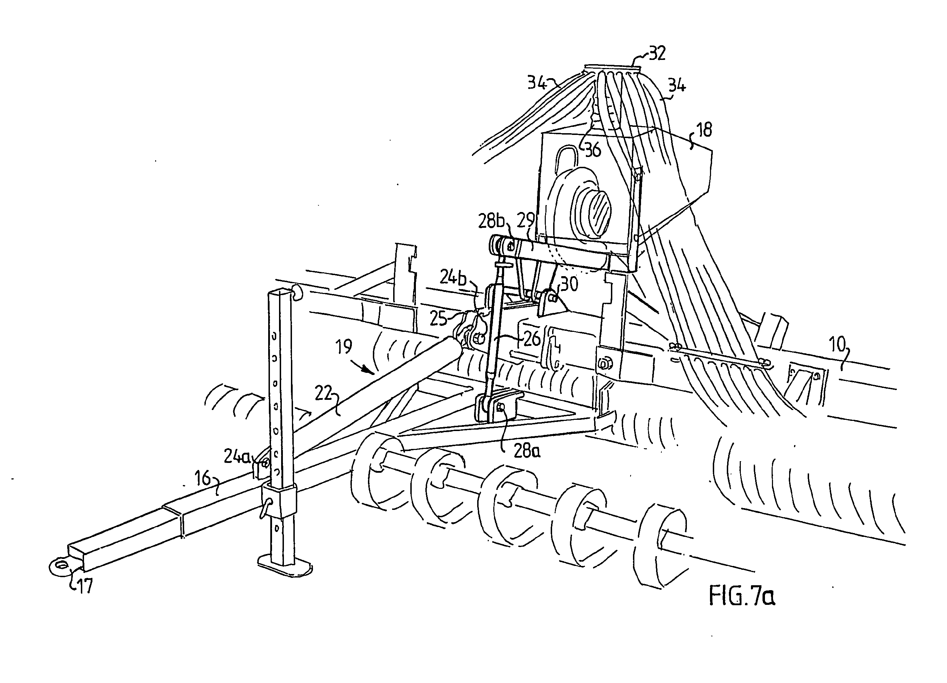

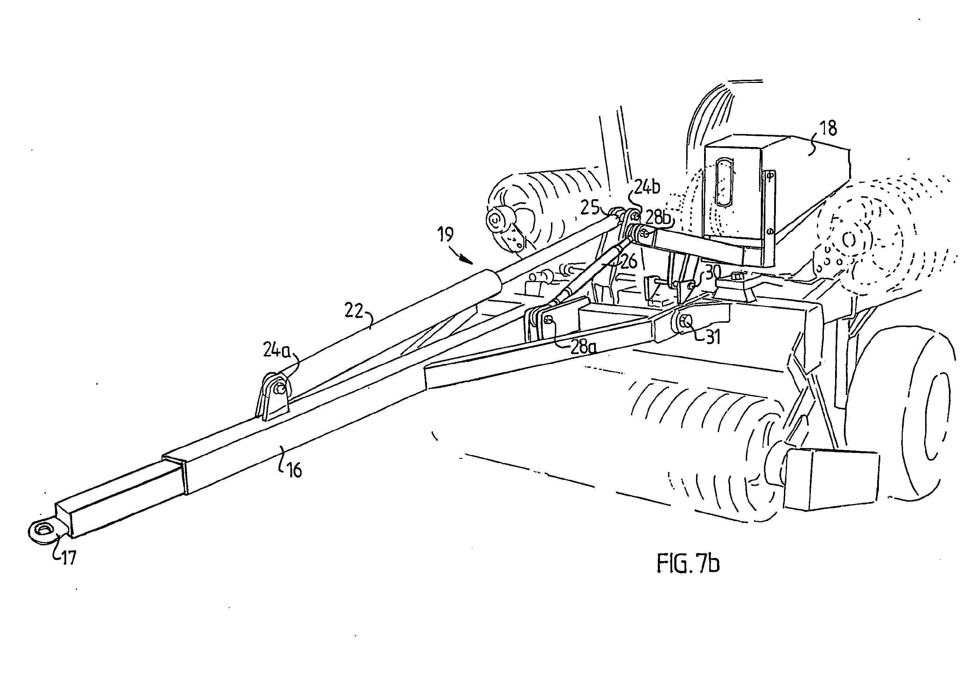

Figure 1a shows an agricultural machine 2 in the form of a combined roller and sowing aggregate in working position. The agricultural machine 2 has a central section 4, which on each side has an articulated connection to outer sections 6, 8. The sections 4, 6, 8 each comprise a frame beam 10, which carries a soil working unit, such as a ring roller 12 provided with roller rings. The frame beam 10 of the outer sections 6, 8 is provided with a wheel 14 which is not in contact with the ground. The radial extension of the wheel is essentially parallel to the ground (c.f. Fig. 7). A towing device 16 has a coupling member 17 intended to be coupled to a draught vehicle, such as a tractor.

A container 18 for granular material, such as seed or artificial fertilizer or alternatively liquid is arranged in line with the towing device 16 in the direction of travel behind the central section 4. The container 18 is connected to the central section 4 by means of a joint mechanism 19.

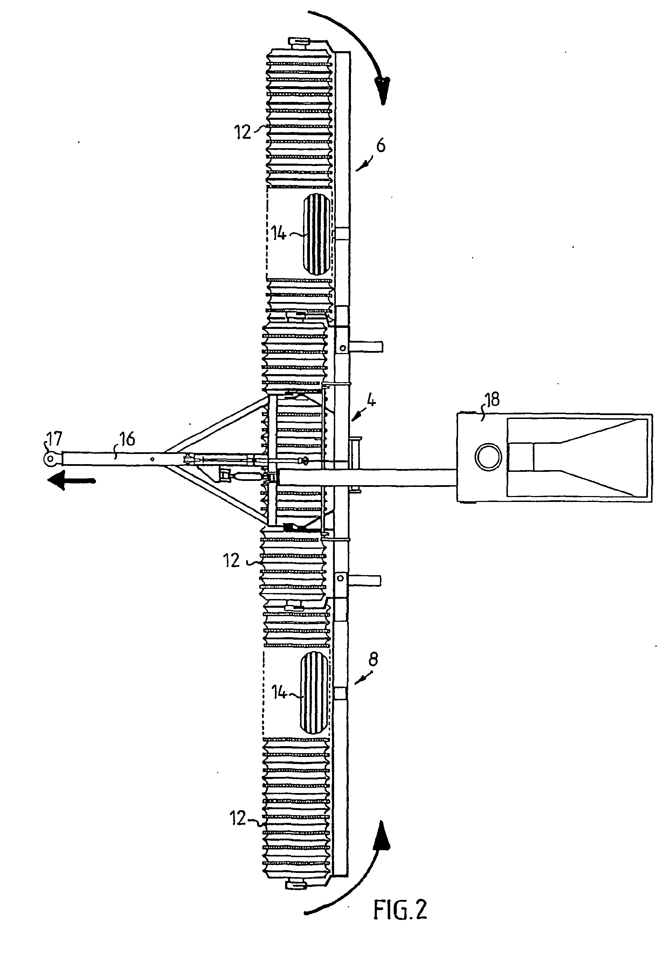

Figure 2 shows how the towing device 16 is drawn by a draught vehicle at the same time as a hydraulic cylinder turns the sections 4, 6, 8 in such a way that the wheels 14 come into contact with the ground. The rotation axle of the wheels 14 is essentially parallel to both the ground and the direction of travel. In this position the roller sections 12 are no longer in contact with the ground.

The container 18 is now further behind section 4 than when in the working position according to Figure 1, since the turning of the section also causes the connections of the container 18 in section 4 to be turned to a corresponding extent.

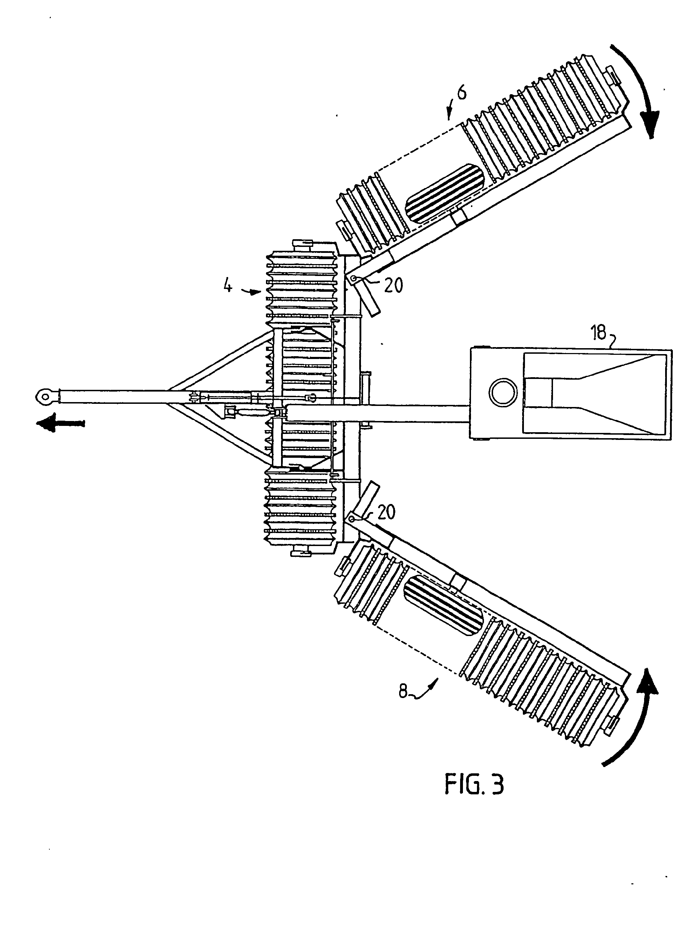

Figure 3 shows how the towing device 16 is drawn by the draught vehicle so that the sections 6 and 8 are turned around the articulation points 20 towards the container 18.

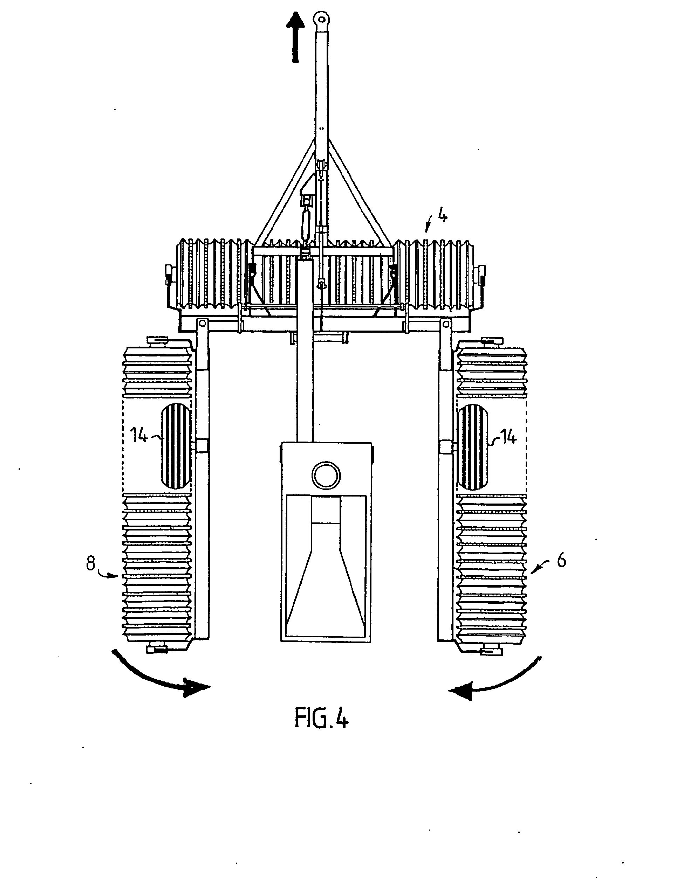

Figure 4 shows how the draught force of the draught vehicle has forced sections 6 and 8 to adopt a transport position, i.e. with the axles of the wheels 14 across the direction of travel.

Document WO 88/04134 describes further details regarding the change from working position to transport position and vice versa of an agricultural machine, and is herewith incorporated as part of the present application.

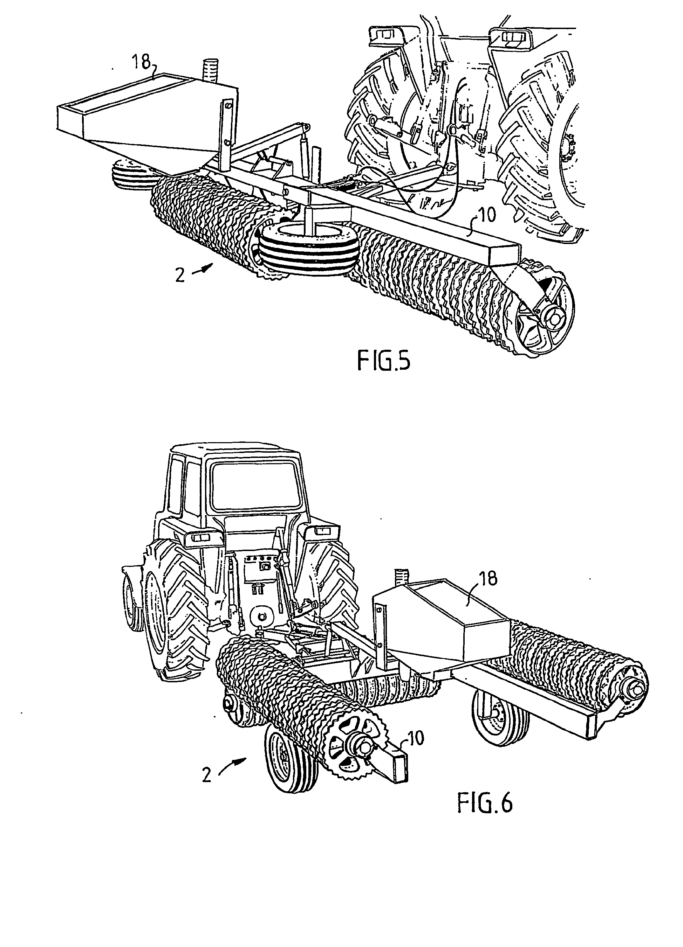

Figure 5 shows in perspective the agricultural machine 2 in working position.

Figure 6 shows in perspective the agricultural machine 2 in transport position.

Despite the beams being turned through approx. 90° during the change from work ing to transport position, the container 18, which is connected to the frame/beams 10, has not been turned. This is thanks to the joint mechanism 19.

Figure 7a and 7b show the agricultural machine 2 in working position and transport position resp. The joint mechanism 19 comprises a hydraulic cylinder 22 rotatably connected via a joint 24a to the towing device 16 and via a j oint 24b to a torque arm 25 arranged on the frame beam 10. A rigging screw 26 is rotatably connected via joints 28a, 28b to the towing device 16 and a bar 29 rigidly arranged on the container 18. The bar 29 is in turn hingedly connected to the frame beam 10 via a j oint 30. The towing device 16 has an articulated connection to the frame beam 10 via a joint 31. Joints 24a, 24b, 28a, 28b and 30 are advantageously provided with dampening members in the form of rubber bushes for the uptake of impacts and vibrations.

During the change from working position to transport position, the hydraulic cylinder 22 presses on the torque arm 25 so that the frame beam 10 is forced to turn from the position shown in Figure 7a to the position shown in Figure 7b, i.e. the frame beam 10 is turned through approx. 90°. Thanks to the configuration of the joint mechanism 19, the container 18 now maintains its position relative to the coupling member 17, which means that the container 18 adopts an essentially similar height above the ground, both in working position and transport position.

Adjustment of the height of the container above the ground can be achieved through adjustment of the length of the rigging screw 26 and/or the length of the hydraulic cylinder 22 in the normal position.

Both in working position and transport position, and even in positions between these, it is possible to lower the container 18 by means of the joint mechanism 19 so that the container comes closer to the ground, which is advantageous during refilling of the container 18.

Of course the rigging screw 26 can be replaced by a hydraulic cylinder or a brace. Adjustability can then be suitably achieved by a number of openings for connection of the joints 28a and or 28b.

Of course the torque arm 25 and the articulation points of the joint mechanism can be positioned in such a way that rotation around the joint 29 is performed in the opposite direction.

Figure 7a also shows a distribution member 32 connected to the container 18, to tubes 34 and to a fan 36 for fluidising of granular material in the container 18. Thanks to the fan 36, the granular material is transported via a riser pipe 36 to the distributor head 32, where the granular material is distributed out in the tubes 34 to coulters not shown.

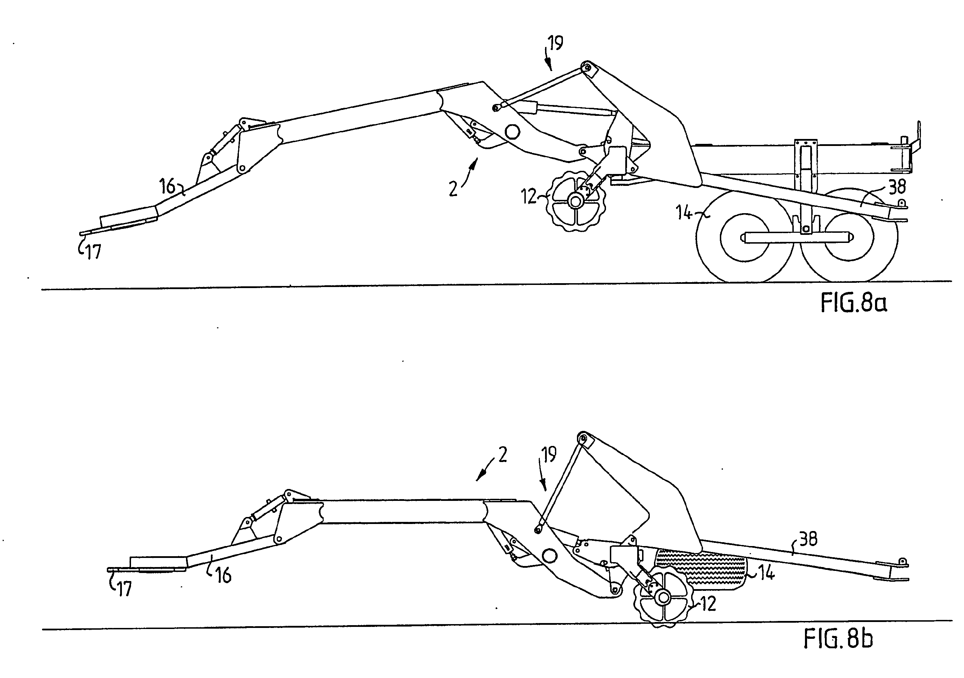

Figure 8a shows an alternative agricultural machine in transport position. The towing device 16 is, as above, adapted to be connected to a draught vehicle, while a further towing device 38 is intended to be connected to a further agricultural machine such as a cultivator or a roller.

Figure 8b shows the agricultural machine in working position. Herein, the wheels 14 have been turned aside and the ring roller is working the soil. The towing device is situated at essentially the same distance from the ground and from the coupling member 17 as in the transport position. Hereby, the agricultural implement can be kept connected to the towing device 3 8 during the change from working position to transport position and vice versa.

In Figures 8a and 8b, the side-situated roller sections have been omitted for the sake of clarity.

Of course, the soil working unit may be provided with soil cultivation members.

## Claims

1. An agricultural machine comprising a towing device (16) with a coupling member (17) for coupling to a draught vehicle, and at least one elongated section (4) adapted to be conveyed essentially across the direction of work of the agricultural machine, said section (4) comprising at least one soil working member (12), said section (4) being rotatable from a transport position in which wheels (14) are in contact with the ground, wherein the soil working member is in a higher position, to a working position in which wheels (14) are not in contact with the ground, wherein the soil working member is in a lower position and vice versa, **characterised in that** a device (18,38) is connected by means of a connecting arrangement (19) to said section (4), wherein the connecting arrangement (19) is adapted to maintain the device (18, 38) in essentially the same position relative to the ground in working position and transport position.

2. An agricultural machine according to Claim 1, wherein the connecting arrangement (19) is adapted to maintain the device (18, 38) in such a way that it in working position and transport position has essentially the same position relative to the coupling member (17) in a horizontal plane.

3. An agricultural machine according to any one of Claims 1 and 2, wherein the connecting arrangement (19) is adapted to maintain the device in such a way that it in working position and transport position has essentially the same position relative to the coupling member (17) in a vertical plane.

4. An agricultural machine according to any one of Claims 1 to 3, wherein the connecting arrangement (19) is adapted to displace the device (18, 38) to a further position, which differs from the position in working position.

5. An agricultural machine according to Claim 4, wherein the further position (18, 3 8) is lower than the working position, viewed in a vertical plane.

6. An agricultural machine according to any one of the preceding patent claims, wherein the connecting arrangement (19) comprises a joint mechanism.

7. An agricultural machine according to Claim 6, wherein the joint mechanism (19) comprises an adjustment member (26) for adjusting the position of the device relative to the ground.

8. An agricultural machine according to Claim 7, wherein the adjustment member (26) comprises a hydraulic cylinder or a rigging screw.

9. An agricultural machine according to any one of Claims 6 - 8, wherein the joint mechanism (19) comprises a dampening member.

10. An agricultural machine according to any one of the preceding claims, wherein the device is a container (18) for granular material, such as seed or fertilizer.

11. An agricultural machine according to any one of Claims 1 to 10, wherein the device is a further towing device (3 8).

12. An agricultural machine according to any one of the preceding claims, wherein said section (4) is rotatable substantially 90°.

13. An agricultural machine according to any one of the preceding claims, wherein further sections (6, 8) are arranged in the working position on each side of and essentially parallel to the extension of the said section (4), wherein the further sections in the transport position are arranged essentially perpendicular to the said section.

14. An agricultural machine according to claim 13, wherein said further sections (6, 8) are rotatable substantially 90°, together with said section (4).

15. An agricultural machine according to any one of the preceding claims, wherein said section (4) and said further section (6, 8), respectively, comprises a beam (10), at which said soil working member is arranged.

## Patentansprüche

1. Landwirtschaftliche Maschine, umfassend eine Schleppvorrichtung (16) mit einem Kupplungselement (17) zum Ankuppeln an ein Zugfahrzeug und zumindest einen länglichen Abschnitt (4), der geeignet ist, um im Wesentlichen quer zur Arbeitsrichtung der landwirtschaftlichen Maschine befördert zu werden, bei welchem der Abschnitt (4) zumindest ein bodenbearbeitendes Element umfasst und aus einer Transportstellung drehbar ist, in der Räder (14) in Kontakt mit dem Boden sind, in der sich das bodenbearbeitende Element in einer höheren Stellung befindet, in eine Arbeitsstellung, in der Räder (14) nicht in Kontakt mit dem Boden sind, in der sich das bodenbearbeitende Element in einer unteren Stellung befindet, und umgekehrt, **dadurch gekennzeichnet, dass** eine Vorrichtung (18, 38) über eine Verbindungsanordnung (19) mit dem Abschnitt (4) verbunden ist, wobei die Verbindungsanordnung (19) geeignet ist, die Vorrichtung (18, 38) in der im Wesentlichen gleichen Stellung relativ zum Boden in der Arbeitsstellung und Transportstellung zu halten.

2. Landwirtschaftliche Maschine gemäß Anspruch 1, wobei die Verbindungsanordnung (19) geeignet ist, die Vorrichtung (18, 38) auf eine solche Weise zu halten, dass sie in ihrer Arbeitsstellung und Transportstellung im Wesentlichen die gleiche Stellung relativ zum Kupplungselement (17) in einer horizontalen Ebene aufweist.

3. Landwirtschaftliche Maschine gemäß einem der Ansprüche 1 und 2, wobei die Verbindungsanordnung (19) geeignet ist, die Vorrichtung auf eine Weise zu halten, dass sie in ihrer Arbeitsstellung und Transportstellung im Wesentlichen die gleiche Stellung relativ zum Kupplungselement (17) in einer vertikalen Ebene aufweist.

4. Landwirtschaftliche Maschine gemäß einem der Ansprüche 1 bis 3, wobei die Verbindungsanordnung (19) geeignet ist, die Vorrichtung (18, 38) in eine weitere Stellung, die sich von der Stellung in Arbeitsstellung unterscheidet, zu verlagern.

5. Landwirtschaftliche Maschine gemäß Anspruch 4, wobei die weitere Stellung (18, 38) niedriger ist als die Arbeitsstellung, gesehen in einer vertikalen Ebene.

6. Landwirtschaftliche Maschine gemäß einem der vorhergehenden Patentansprüche, wobei die Verbindungsanordnung (19) einen Verbindungsmechanismus umfasst.

7. Landwirtschaftliche Maschine gemäß Anspruch 6, wobei der Verbindungsmechanismus (19) ein Einstellelement (26) umfasst zum Einstellen der Stellung der Vorrichtung relativ zum Boden.

8. Landwirtschaftliche Maschine gemäß Anspruch 7, wobei das Einstellelement (26) einen Hydraulikzylinder oder eine Einstellschraube umfasst.

9. Landwirtschaftliche Maschine gemäß einem der Ansprüche 6 bis 8, wobei der Verbindungsmechanismus (19) ein Dämpfungselement umfasst.

10. Landwirtschaftliche Maschine gemäß einem der vorhergehenden Ansprüche, wobei die Vorrichtung ein Behälter (18) für körniges Material wie Saatgut oder Dünger ist.

11. Landwirtschaftliche Maschine gemäß einem der Ansprüche 1 bis 10, wobei die Vorrichtung eine weitere Schleppvorrichtung (38) ist.

12. Landwirtschaftliche Maschine gemäß einem der vorhergehenden Ansprüche, wobei der Abschnitt (4) im Wesentlichen 90° drehbar ist.

13. Landwirtschaftliche Maschine gemäß einem der vorhergehenden Ansprüche, bei der weitere Abschnitte (6, 8) in der Arbeitsstellung auf jeder Seite und im Wesentlichen parallel zur Erstreckung des Abschnitts (4) angeordnet sind, wobei die weiteren Abschnitte in der Transportstellung im Wesentlichen senkrecht zum Abschnitt angeordnet sind.

14. Landwirtschaftliche Maschine gemäß Anspruch 13, wobei die weiteren Abschnitte (6, 8) im Wesentlichen zusammen mit dem Abschnitt (4) um 90° drehbar sind.

15. Landwirtschaftliche Maschine gemäß einem der vorhergehenden Ansprüche, wobei der Abschnitt (4) beziehungsweise die weiteren Abschnitte (6, 8) einen Trägerbalken (10) umfassen, an den das bodenbearbeitende Element angeordnet ist.

## Revendications

1. Machine agricole comprenant un dispositif de remorquage (16) doté d'un élément d'accouplement (17) permettant l'accouplement à un véhicule d'attelage, et au moins une section (4) de forme allongée destinée à être déplacée sensiblement transversalement à la direction de travail de la machine agricole, ladite section (4) comprenant au moins un élément de travail de la terre (12), ladite section (4) étant apte à tourner depuis une position de transport dans laquelle les roues (14) sont en contact avec le sol, l'élément de travail de la terre se trouvant alors en position haute, dans une position de travail dans laquelle les roues (14) ne sont pas en contact avec le sol, l'élément de travail de la terre se trouvant alors en position basse, et vice versa, **caractérisé en ce qu'**un dispositif (18, 38) est raccordé à ladite section (4) au moyen d'un système de raccordement (19), le système de raccordement (19) étant destiné à maintenir le dispositif (18, 38) sensiblement à la même position par rapport au sol dans une position de travail et une position de transport.

2. Machine agricole selon la revendication 1, dans laquelle le système de raccordement (19) est destiné à maintenir le dispositif (18, 38) de manière à ce que celui-ci ait, dans la position de travail et la position de transport, sensiblement la même position dans un plan horizontal par rapport à l'élément de raccordement (17).

3. Machine agricole selon l'une quelconque des revendications 1 et 2, dans laquelle le système de raccordement (19) est destiné à maintenir le dispositif de manière à ce que celui-ci ait, dans la position de travail et la position de transport, sensiblement la même position dans un plan vertical par rapport à l'élément de raccordement (17).

4. Machine agricole selon l'une quelconque des revendications 1 à 3, dans laquelle le système de raccordement (19) est destiné à déplacer le dispositif (18, 38) vers une autre position, qui est différente de la position de travail.

5. Machine agricole selon la revendication 4, dans laquelle l'autre position (18, 38) est plus basse que la position de travail, vue dans un plan vertical.

6. Machine agricole selon l'une quelconque des revendications précédentes, dans laquelle le système de raccordement (19) comprend un mécanisme articulé.

7. Machine agricole selon la revendication 6, dans laquelle le mécanisme articulé (19) comprend un élément de réglage (26) permettant de régler la position du dispositif par rapport au sol.

8. Machine agricole selon la revendication 7, dans laquelle l'élément de réglage (26) comprend un vérin hydraulique ou un ridoir.

9. Machine agricole selon l'une quelconque des revendications 6 à 8, dans laquelle le mécanisme articulé (19) comprend un élément d'amortissement.

10. Machine agricole selon l'une quelconque des revendications précédentes, dans laquelle le dispositif est un conteneur (18) destiné à un matériau granulaire, tel que des graines ou un engrais.

11. Machine agricole selon l'une quelconque des revendications 1 à 10, dans laquelle le dispositif est un autre dispositif de remorquage (38).

12. Machine agricole selon l'une quelconque des revendications précédentes, dans laquelle ladite section (4) est apte à tourner sur sensiblement 90°.

13. Machine agricole selon l'une quelconque des revendications précédentes, dans laquelle d'autres sections (6, B) sont disposées dans la position de travail de chaque côté et sensiblement parallèlement à l'extension de ladite section (4), les autres sections sont disposées dans la position de transport sensiblement perpendiculairement à ladite section.

14. Machine agricole selon la revendication 13, dans laquelle lesdites autres sections (6, 8) sont aptes à tourner sur sensiblement 90°, conjointement avec ladite section (4).

15. Machine agricole selon l'une quelconque des revendications précédentes, dans laquelle ladite section (4) et ladite autre section (6, 8), respectivement, comprennent toutes les deux une poutre (10), au niveau de laquelle est placé ledit élément de travail de la terre.
